# EUROPÄISCHE PATENTSCHRIFT

(11) **EP 1 195 337 B1**
(45) Veröffentlichungstag und Bekanntmachung des Hinweises auf die Patenterteilung: **01.06.2005**
(21) Anmeldenummer: 01119983.3
(22) Anmeldetag: 18.08.2001
(51) Int. Cl.: B65G 57/16, B29C 51/44

(54) **Verfahren zum Stapeln von Behältern aus thermoplastischem Kunststoff und Vorrichtung zur Durchführung des Verfahrens**
Method for piling containers made of thermoplastic material and device for executing the method
Procédé pour empiler des conteneurs en matière thermoplastique et dispositif pour la mise en oeuvre de ce procédé

(30) Priorität: 07.09.2000 DE 10044228
(43) Veröffentlichungstag der Anmeldung: 10.04.2002
(73) Patentinhaber: Adolf Illig Maschinenbau GmbH & Co. KG, 74081 Heilbronn (DE)
(72) Erfinder: Köhler, Hans, 74081 Heilbronn (DE)

(56) Entgegenhaltungen:
- DE-A- 2 714 352
- DE-A- 3 346 628
- DE-A- 19 812 414
- DE-A- 19 848 628
- DE-A- 19 852 359
- GB-A- 1 039 064
- US-A- 2 603 363
- US-A- 5 234 313
- US-A- 5 273 167

## Beschreibung

Die Erfindung betrifft ein Verfahren zum Stapeln von Behältern aus thermoplastischem Kunststoff mit den Merkmalen des Oberbegriffes des Patentanspruches 1. Sie betrifft ferner eine Vorrichtung zur Durchführung des Verfahrens.

Die in einer Thermoformmaschine mittels eines kombiniert formenden und stanzenden Werkzeuges geformten und ausgestanzten Behälter werden in der Regel nach dem Auswerfen aus dem Form-/Stanzwerkzeug in Stapelmagazine übergeben. Dies kann direkt erfolgen, indem der Formboden des Werkzeuges verschoben und die Behälter dadurch in die Stapelmagazine übergeben und dort zurückgehalten werden. Die DE 33 46 628 C2 zeigt ein solches Verfahren.
Es ist ferner aus DE 198 52 359 A1 bekannt, die Behälter mittels einer Übergabeeinrichtung zu übergeben, die die ausgeworfenen Behälter erfasst und nach Drehung um 180° in die Stapelmagazine einschiebt. Aus der DE 198 12 414 A1 ist eine Übergabeeinrichtung ohne Drehung - also bei linearer Weiterleitung - mittels einer Fangplatte bekannt. Pro Takt wird ein Behälter aufgenommen und in ein Stapelmagazin übergeben.
Ebenfalls eine Fangplatte zeigt die DE 198 48 628 A1, bei der jedoch ganze Behälterstapel in der Fangplatte gebildet werden, bevor diese in ein Stapelmagazin übergeben werden, das dann zu einer Übergabestelle zur Hintereinanderführung aller Stapel geführt wird.
Aus der DE-AS 27 14 352 ist es ebenfalls bekannt, in eine Fangplatte mehrere Behälter einzustapeln und dann mittels einer aus Stangen bestehenden Übergabeeinrichtung ganze Behälterstapel zu ergreifen und weiter zu transportieren.

Bei all diesen bekannten Verfahren werden die in einer Fangplatte oder in einem Stapelmagazin befindlichen, einen Behälterstapel bildenden Behälter beim Einschieben des nächsten Behälters um ein Maß verschoben, das dem Stapelmaß, d.h. dem Abstand zweier benachbarter gestapelter Behälter, entspricht. Dieses Weiterschieben der Behälterstapel erfolgt bei der DE 198 12 414 A1 durch die als Dorne ausgebildeten Greifkörper, die punktuell auf den Rand des zuletzt eingestapelten Behälters treffen und den Vorschub der Behälterstapel bewirken, wenn sie den neuen Behälter in die Stapelmagazine überführen.
Bei modernen Thermoformautomaten werden Taktzahlen bis über 40 Takte/min erreicht. Das bedeutet, dass zum Einstapeln der Behälter wenig Zeit zur Verfügung steht und dies folglich sehr rasch vorgenommen werden muss. Dies insbesondere bei direkter Einstapelung in die Stapelmagazine bzw. in eine ortsfeste Fangplatte. Das Weiterführen der vorhandenen Behälterstapel um das Abstandsmaß muss in einer Zeit in der Größenordnung von 0,1 sec erfolgen, um bei 40 Takten pro Minute eine Taktzeit von 1,5 Sekunden erreichen zu können für die Verfahrensschritte formen - auskühlen - ausstanzen - Werkzeug öffnen - auswerfen - Werkzeug schließen.
Es kommt hinzu, dass die Behälter bei dieser Taktzahl noch relativ warm entformt werden müssen, was prinzipiell je nach Materialart und -dicke möglich ist, aber die Gefahr mit sich bringt, dass die Behälter durch mechanische Krafteinwirkung deformiert werden. Diese Krafteinwirkung tritt ein, weil die Behälter am Boden durch den verschiebbaren Formboden des Form/Stanzwerkzeuges verschoben werden und mit dem Behälterrand auf die Stapelkante des zuvor gestapelten Behälters treffen. Je nach Anzahl der bereits gestapelten Behälter und damit deren Masse muss eine Kraft entsprechend dem Produkt aus Masse x Beschleunigung ( K = m x b ) aufgewandt werden, die vom Behälterrand und der Seitenwand des Behälters bis zum Formboden aufgenommen werden muss. Gerade bei dünnwandigen Behältern, die eine hohe Taktzahl wegen ihrer rascheren Auskühlung im Formwerkzeug erlauben, besteht eine hohe Gefahr der Deformation der Behälter, die umso größer wird, je länger der Behälterstapel wird. In der Praxis beschränkt diese Deformationsgefahr die Taktzahl der Vorrichtung.

Wenn man das Weiterschieben der Behälter durch die Dorne der pro Takt verschobenen Fangplatte ( DE 198 12 414 A1 ) vornimmt müssen zwar Behälterwand und Behälterboden beim Einstapeln keine Kraft aufnehmen, die gesamte Kraft zum Weiterschieben eines Behälterstapels wirkt aber jetzt an drei oder vier Stellen punktuell am Behälterrand des zuvor gestapelten Behälters, der - obwohl inzwischen ein Takt vergangen ist - in diesen 1,5 Sekunden nur unwesentlich abgekühlt ist, sodass bei dieser Stapelweiterführung die Deformationsgefahr an mehreren Stellen des Behälterrandes besteht. Die Fahrgeschwindigkeit der Fangplatte ist zwar reduziert im Verhältnis zur Geschwindigkeit des Formbodens, aber trotzdem noch relativ hoch. In den zur Verfügung stehenden 1,5 Sekunden muss ein Verfahrweg von insgesamt ca. 400 mm - hin und zurück gerechnet - durchfahren werden. Auch wenn man einen langsameren Bewegungsablauf in der Endlage der Fangplattenbewegung einrechnet ergibt sich eine Zeit für den eigentlichen Stapelhub von ca. 8 mm in der Größenordnung von 0,3 Sekunden.

Durch das relativ schnelle Einstapeln von Behältern bei den bekannten Verfahren und dem damit verbundenen Beschleunigen des gesamten bereits gebildeten Behälterstapels besteht die Gefahr, dass bei flachen Behältern diese auseinanderdriften und damit der ganze Stapel auseinander fällt.

Aus der US 5,273,167 A ist es bekannt, Behälter aus Teig zu backen, in eine Kontrolleinrichtung zu übergeben und daraus nach der Kontrolle gute Behälter in Stapelmagazine zu überführen. Dieses Überführen erfolgt durch zwei Reifer. Ein erster Greifer führt die Behälter zum Stapel und stützt diesen, der zweite Greifer, der den Stapel gehalten hat, öffnet, fährt um einen Stapelabstand nach unten, schließt und ergreift auf diese Weise den neuen Behälter einschließlich des Stapels. Der erste Greifer muss während dieser Zeit stehen bleiben. Danach fährt der Greifer wieder um den Stapelabstand nach oben. Für hohe Taktzahlen, wie bei Thermoformmaschinen gefordert, ist diese Art der Übergabe und der Stapelverschiebung nicht geeignet, da die Wartezeit des ersten Greifers direkt die Taktzeit verlängert. Es kommt hinzu, dass durch die taktweise Bewegung des bereits gebildeten Stapels eine Deformationsgefahr der noch warmen Behätterränder besteht, an deren Stapelnoppen die Behälter sich berühren und die die Beschleunigungskräfte übemehmen müssen.

Der Erfindung liegt die Aufgabe zugrunde, das Verfahren so auszubilden, dass eine hohe Taktzahl möglich ist und beim Übergeben von Behältern in Stapelmagazine oder in eine ortsfeste Fangplatte auch noch warme und/oder dünnwandige Behälter bei der Stapelbildung nicht deformiert werden und nicht - bedingt durch rasche Bewegungen der Stapel beim Einstapeln - auseinanderdriften.

Gelöst ist diese Aufgabe durch die im Hauptanspruch angegebenen Maßnahmen. Zunächst werden die neuen Behälter bis zu ersten Rückhalteorganen geführt, wenn der Formboden oder eine zwischengeschaltete Übergabeeinrichtung die Behälter in die Stapelmagazine oder in die Fangplatte übergibt, sodass diese Einrichtungen sofort zurückbewegt werden können. Das Verschieben der neuen Behälter zu beabstandeten zweiten Rückhalteorganen und dabei das Weiterbewegen eines sich bereit gebildeten Behälterstapels erfolgt durch eine Verschiebeeinrichtung mit langsamer Geschwindigkeit und damit mit geringer Krafteinwirkung auf die bereits eingestapelten Behälter. Diese Verschiebeeinrichtung hat bei der beispielsweisen Taktzahl von 40/min 1,5 Sekunden Zeit, um einen Verfahrweg in der Größenordnung von 2x8 mm ( hin und zurück ) auszuführen. Gegenüber dem bekannten Verfahren mit verfahrbarer Fangplatte also eine fast 10fach längere Zeit und das Verschieben kann damit mit einer entsprechend langsameren Geschwindigkeit erfolgen. Dieses Verschieben um das Stapelmaß kann erfolgen durch eine eigene Verschiebeeinheit, die nur diese Aufgabe hat, wobei das Entfernen der Stapel durch eine an sich bekannte zweite Einrichtung, z.B. über Stangen, erfolgt, wenn die vorgegebene Anzahl von Behältern pro Stapel erreicht ist.

Dieses Verschieben der Behälterstapel um das Stapelmaß kann aber auch mittels der Einrichtung vorgenommen werden, die die Stapel aus den Stapelmagazinen bzw. aus der ortsfesten Fangplatte herausführt. Der Aufwand ist dann gering, weil nur ein entsprechender Antrieb mit unterschiedlichem Hub sowie eine Steuerungsanpassung benötigt wird. Es tritt dann zwar das zeitliche Problem auf, dass zum Abführen der fertigen Behälterstapel mehr Zeit benötigt wird als die Taktzeit. Es werden folglich während des Räumens zwei oder drei Behälter eingestapelt ohne zwischenzeitliches Verschieben um das Stapelmaß. Dies ist meist unkritisch, da diese wenigen Behälter eine geringe Masse aufweisen, die keine Deformation befürchten lassen. Diese Gefahr wächst erst mit höherer Anzahl von Behältern im Behälterstapel.

Dieses Verfahren erlaubt auch ohne wesentliche Steigerung der Deformationsgefahr eine Verschiebung der Behälterstapel in den Stapelmagazinen bzw. in der ortsfesten Fangplatte um ein Maß, das über dem Stapelmaß liegt. Man kann dadurch einen Abstand zwischen dem letzten eingestapelten Behälter und dem Behälterstapel herbeiführen, der in der Größenordnung des doppelten bis dreifachen Stapelmaßes liegt. Dieses Freistehen begünstigt das Abkühlen des letzten eingestapelten Behälters auf der Innenfläche und des letzten Behälters des Stapels auf der Außenfläche, was dadurch verbessert werden kann, dass - vorzugsweise gekühlte und/oder sterilisierte - Luft auf beide Flächen über Düsen geblasen wird. Es hat sich gezeigt, dass die Behälter bei dieser hohen Taktzahl noch relativ warm sind und - wenn ineinandergestapelt - sehr schlecht weiter abkühlen. Diese Kühlung bringt eine deutliche Verbesserung der Abkühlung.

Die Vorrichtung zur Durchführung des Verfahrens ist gekennzeichnet durch die Merkmale des Anspruches 6.

Das Verfahren ist anhand der schematischen Zeichnungen der Vorrichtung näher beschrieben. Es zeigen:
- Figur 1: eine erste Variante eines Stapelmagazins mit einer Verschiebeeinrichtung und einer getrennten Stapelentnahmeeinrichtung.
- Figur 2: eine zweite Variante eines Stapelmagazins mit einer kombinierten Stapelentnahme- und Stapelverschiebeeinrichtung - Schnitt entlang der Linie C-C in Figur 3.
- Figur 3: eine Draufsicht auf ein Stapelmagazin gemäß Figur 2 entlang der Linie B-B in Figur 2, zweireihig ausgebildet.
- Figur 4: eine Stapelplatte mit kombinierter Stapelentnahme- und Stapelverschiebeeinrichtung, einreihig dargestellt
- Figur 5: eine Draufsicht auf die Stapelplatte nach Figur 4 - Schnitt A-A in Figur 4

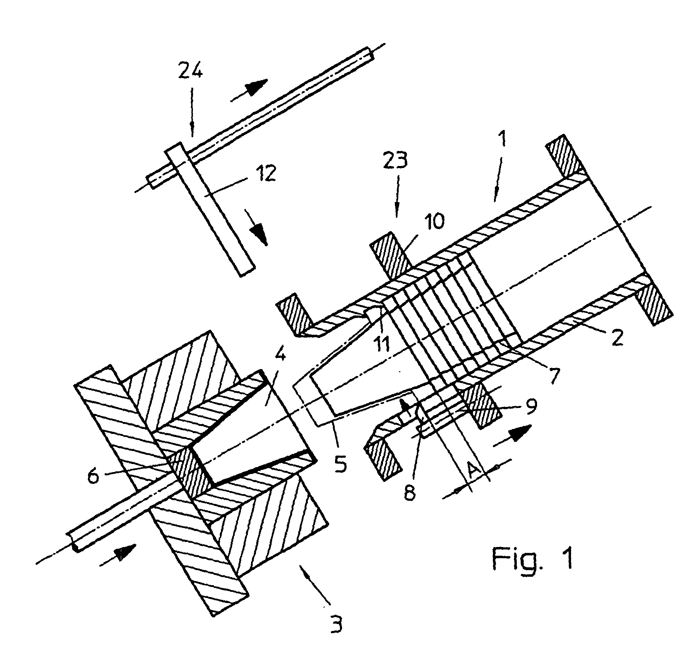

In Figur 1 ist eine erste Ausführungsform der Vorrichtung in Form eines einreihigen Stapelmagazins 2 dargestellt, bei der das Verfahren Anwendung findet. Das Stapelmagazin 2 ist schräg angeordnet, und vor dessen untere Öffnung wird das Unterteil 3 eines Form-/Stanzwerkzeuges geführt. Aus dessen Kavitäten 4 werden geformte und ausgestanzte Behälter 5 mittels des verschiebbaren Formbodens 6 ausgestoßen. Sie gelangen dadurch in das Stapelmagazin 2, das örtlich oder ringsum die Behälter 5 führt und zentriert. Die Lage eines neu eingestapelten Behälters 5 ist strichpunktiert in Figur 1 dargestellt. In dieser Stellung werden Rückhalteorgane wirksam, die den Behälter 5 beim Zurückfahren des Formbodens 6 zurückhalten. Diese Rückhalteorgane können als feste Rückhalteorgane in Form von Bürsten, Klinken, Klappen, als gefederte Andrückteile oder als geschaltete Rückhalteorgane am Stapelmagazin 2 angeordnet sein.
Figur 1 zeigt eine Stapelverschiebeeinrichtung 23 mit betätigten Rückhalteorganen in der Weise, dass die Rückhalteorgane 8 an Stangen 9 sitzen, die an einer in Stapelrichtung verschiebbaren Platte 10 befestigt sind. Solche betätigte Rückhalteorgane sind beispielsweise aus der DE-AS 27 14 352 bekannt, weshalb ihr Aufbau nicht näher beschrieben ist.

Nach dem Ausfahren der Rückhalteorgane 8 werden Platte 10 und Stangen 9 um ein Maß A in Stapelrichtung verschoben, wobei das Maß A mindestens dem Abstand (Stapelmaß ) zwischen zwei dicht an dicht stehenden Behältern 5 entspricht. Durch diese Bewegung wird jeder zuletzt eingestapelte Behälter 5 um das Maß A verschoben. Rückhalteorgane 11 halten den Behälterstapel 7, wenn Stangen 9 und Platte 10 - bei zurückgezogenen Rückhalteorganen 8 - wieder in die Ausgangslage zurückfahren und das Einstapeln des nächsten Behälters 5 abwarten. Zwischen zwei Takten der Formmaschine ist auch bei 40 Takten/min genügend Zeit, diesen geringen Hub um das Maß A mit relativ langsamer Geschwindigkeit vorzunehmen, wodurch nur eine geringe Kraft auf den Behälterrand einwirkt. Es ist nach dem Weiterschieben eines Behälterstapels 7 um das Maß A genügend Platz, um den neu eingestapelten Behälter 5, ohne dass eine Kraft auf ihn einwirkt, in das Stapelmagazin 2 einzuführen.

Zum Entfernen der gebildeten Behälterstapel 7 dient im Beispiel nach Figur 1 eine Stapelentnahmeeinrichtung 24, bestehend aus einem quer zur Stapelrichtung verfahrbaren Rechen 12, der nach dem Querverfahren in Stapelrichtung verschoben wird und die Behälterstapel 7 aus dem Stapelmagazin 2 herausführt zur beliebigen Weiterbehandlung/-bearbeitung. Wo erforderlich sind die Teile des Stapelmagazins 2 entsprechend geschlitzt, um den Rechen 12 durchführen zu können.

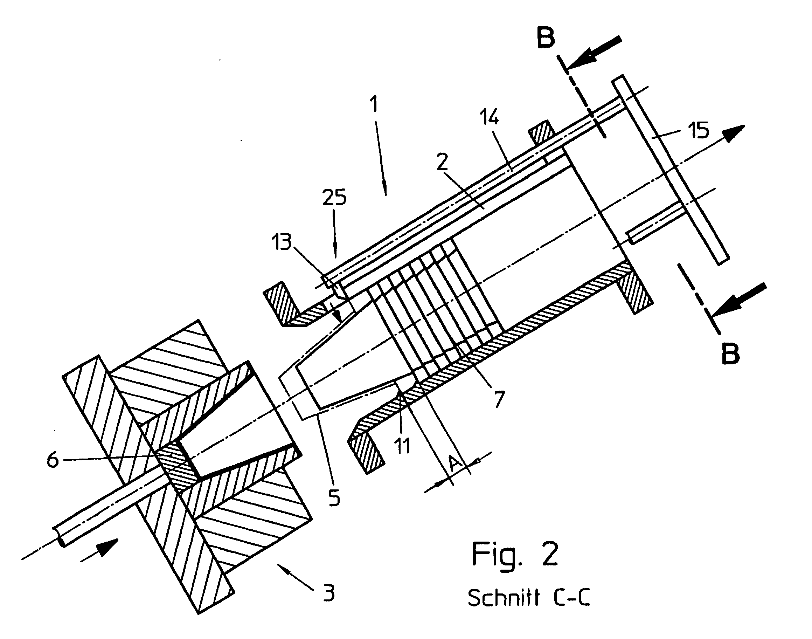

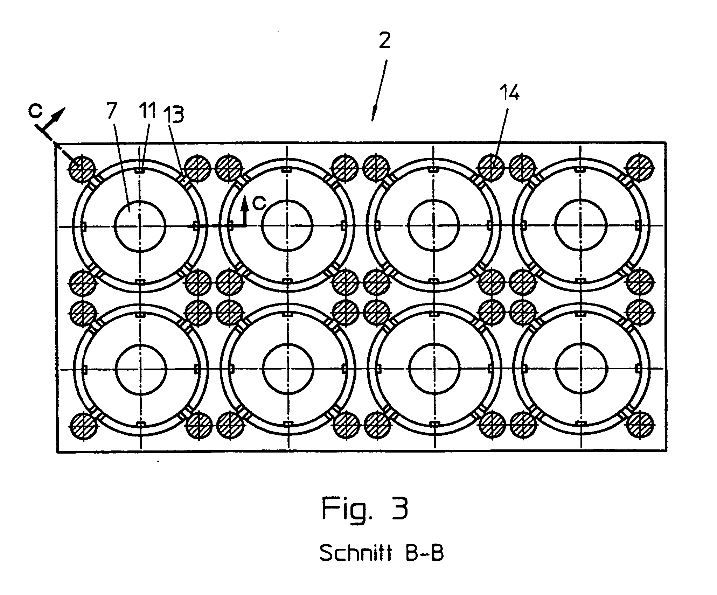

Figur 2 zeigt eine andere Lösung einer Stapelverschiebeeinrichtung 25 für die Behälterstapel 7, die zur Durchführung des Verfahrens eingesetzt werden kann. Die betätigbaren Rückhalteorgane 13 sitzen an Stangen 14, die länger sind als das Stapelmagazin 2 und die an einer Platte 15 befestigt sind. Diese Platte 15 ist über einen nicht dargestellten Antrieb in Stapelrichtung verschiebbar, und zwar zum einem um das Maß A, zum andem um einen großen Hub. Nach dem Einstapeln eines Behälters 5 führen die Stangen 14 pro Takt einen Hub um das Maß A durch, was einen Weitertransport der Behälterstapel 7 bewirkt. Haben alle Behälterstapel 7 eine vorgegebene Länge/Anzahl erreicht wird ein großer Hub ausgelöst zum Austransport aller Behälterstapel 7 aus dem Stapelmagazin 2. Die Behälterstapel 7 werden dann Weiterverarbeitungseinrichtungen zugeführt.
Das Abziehen der Behälterstapel 7 dauert länger als ein Takt der Formmaschine. Das heißt, dass in dieser Zeit zwei oder drei Behälter 5 in die Stapelmagazine 2 eingestapelt werden, wodurch jedoch keine große Kraft auf den zweiten und ggf. dritten Behälter 5 einwirkt, da diese ein geringes Gewicht haben. Diese Lösung gemäß Figur 2 hat den Vorteil, dass nur ein Antrieb benötigt wird für die beiden unterschiedlichen Bewegungen und dass der Einsatz bei mehrreihiger Auslegung des Form/Stanzwerkzeuges aus Platzgründen günstiger ist. Figur 3 zeigt eine Draufsicht auf ein zweireihig ausgebildetes Stapelmagazin 2, aus der die Lage der Stangen 14 (vier pro Behälterstapel 7) ersichtlich ist.

In den Figuren 1 und 2 ist eine direkte Stapelung der Behälter 5 aus dem Unterteil 3 eines Form-/Stanzwerkzeuges dargestellt. Die Erfindung ist genauso anwendbar, wenn die Behälter 5 zuerst auf eine Übergabeeinrichtung in Form einer Saugplatte, Fangplatte oder einer Wendeeinrichtung übergeben werden, die dann die Behälter 5, ggf. mit dem Behälterboden voran, in das Stapelmagazin 2 einschiebt.

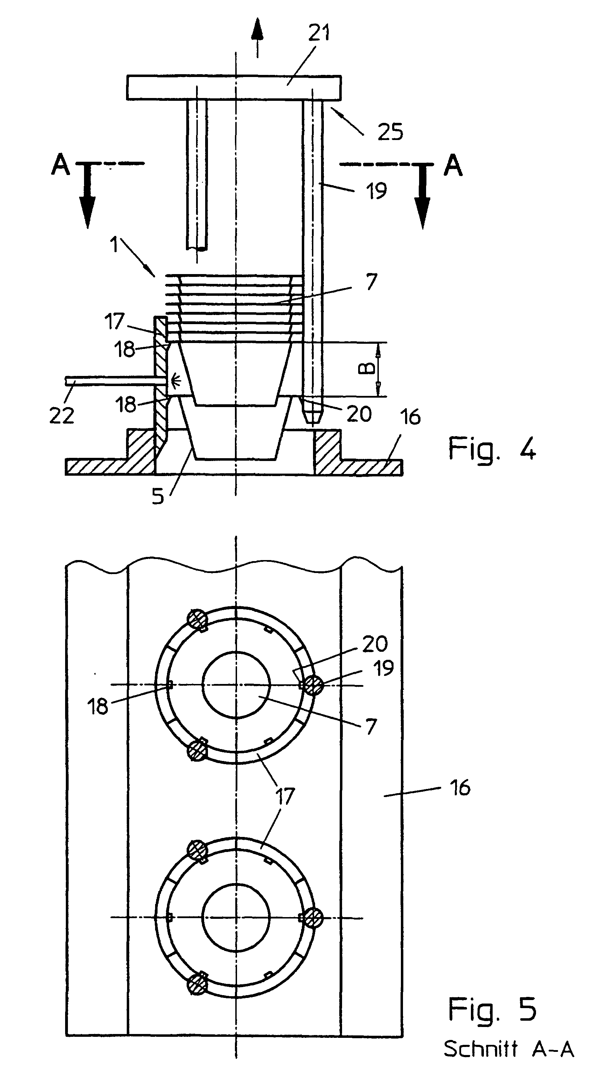

Das erfindungsgemäße Verfahren ist ferner anwendbar, wenn anstelle eines kompletten Stapelmagazins 2 - insbesondere bei vertikaler Stapelung - nur eine ortsfeste Fangplatte 16 mit kurzen Führungen eingesetzt ist, weil die Behälter 5 sich im Behälterstapel 7 selbst zentrieren und diesen versteifen. Vor allem dann, wenn die Stapelverschiebeeinrichtung auch als Stapelentnahmeeinrichtung ausgebildet ist mit eigenen Führungsteilen für den Behälterstapel 7. Eine solche Ausführung zeigen die Figuren 4 und 5 bei einer einreihigen Auslegung des Form-/Stanzwerkzeuges 3. An einer ortsfesten Fangplatte 16 sitzen Führungsteile 17 für eingestapelte Behälter 5, die örtlich Rückhalteorgane 18 aufweisen, um die eingestapelten Behälter 5 zu halten. An Stangen 19 sitzen betätigbare Rückhalteorgane 20, alle Stangen 19 sind an der in Stapelrichtung verschiebbaren Halteplatte 21 befestigt.
Die unteren Rückhalteorgane 18 nehmen den zuletzt eingestapelten Behälter 5 auf, die Rückhalteorgane 20 fahren aus und die Stangen 19 führen einen Hub B aus, der im dargestellten Beispiel größer ist als das Stapelmaß der Behälter 5. Auf diese Weise entsteht ein Abstand zwischen dem letzten eingestapelten Behältem 5 und dem letzten Behälter des Stapels 7 in Größe dieses Abstandes B. Dadurch wird die Abkühlung des zuletzt eingestapelten Behälters 5 und des untersten Behälters 5 des Stapels 7 verbessert. Dies kann noch dadurch positiv beeinflusst werden, dass in diesen Spalt vorzugsweise gekühlte und/oder sterilisierte Luft über Düsen 22 eingeleitet wird.

Die Stangen 19 bilden eine Führung für den wachsenden Behälterstapel 7. Während des Abtransportes der Behälterstapel 7 nach einem großen Hub der Stangen 19 werden wieder wenige Behälter 5 in die Führungsteile 17 gestoßen, deren Länge entsprechend angepasst ist.

## Patentansprüche

1. Verfahren zum Stapeln von Behältern (5) aus thermoplastischem Kunststoff, die aus einer erwärmten Folienbahn in einem Form-/Stanzwerkzeug geformt, ausgestanzt und in noch warmem Zustand aus diesem durch Verschiebung des Formbodens (6) direkt oder mittels einer zwischengeschalteten Übergabeeinrichtung in Stapelmagazine (2) oder in eine Fangplatte (16) überführt, dort von an den Stapelmagazinen (2) oder and der Fangplatte (16) angeordneten Rückhalteorganen (11, 18) zurückgehalten und daraus als Behälterstapel (7) entnommen werden, **dadurch gekennzeichnet, dass** der Formboden (6) oder die Übergabeeinrichtung zum Zuführen der Behälter (5) diese bis zu ersten Rückhalteorganen (11, 18) führt, sofort zurückbewegt wird und die Behälter (5) danach unter Mitnahme des Behälterstapels (7) mittels einer Verschiebeeinrichtung (25, 23) um ein Maß (A, B), das größer oder gleich dem Abstandsmaß zwischen den gestapelten Behältern (5) ist, bis zu zweiten Rückhalteorganen (11, 18) verschoben werden.

2. Verfahren nach Anspruch 1 **dadurch gekennzeichnet dass** das Verschieben der Behälterstapel (7) durch eine kombinierte Stapelentnahme-/Stapelverschiebeeinrichtung (25) erfolgt.

3. Verfahren nach Anspruch 1 **dadurch gekennzeichnet dass** das Verschieben der Behälterstapel (7) durch eine von der Stapelentnahmeeinrichtung (24) getrennte Verschiebeeinrichtung (23) erfolgt.

4. Verfahren nach einem der Ansprüche 1 bis 3, **dadurch gekennzeichnet, dass** bei einer Verschiebung der Behälterstapel (7) um ein Maß (B), das größer ist als der Stapelabstand, Luft in den Spalt zwischen dem letzten eingestapelten Behälter (5) und dem Behälterstapel (7) geblasen wird.

5. Verfahren nach Anspruch 4, **dadurch gekennzeichnet, dass** die Luft gekühlt und/oder sterilisiert ist.

6. Vorrichtung zum Stapeln von Behältern (5) aus thermoplastischem Kunststoff zum Nachschalten an eine Formmaschine, in der in einem Form-/Stanzwerkzeug Behälter aus einer erwärmten Folienbahn aus thermoplastischem Kunststoff geformt, ausgestanzt und durch Verschieben des Formbodens (6) ausgeworfen werden, mit Stapelmagazinen (2) oder mit einer Fangplatte (16), die Rückhalteorgane (11, 18) aufweisen und in die die Behälter (5) direkt aus dem Form-/Stanzwerkzeug mittels der Formböden (6) oder mittels einer zwischengeschalteten Übergabeeinrichtung eingestapelt werden, **gekennzeichnet durch** im Bereich der Eintrittsöffnung der Stapelmagazine (2) oder der Fangplatte (16) in einem Abstand mit dem Maß (A, B), das größer oder gleich dem Abstandsmaß zwischen den gestapelten Behältem (5) ist, angeordnete Rückhalteorgane (11, 18) sowie **durch** eine Stapelverschiebeeinrichtung (23, 25) zum Verschieben der gesamten Behälterstapel (7) zwischen den beabstandeten Rückhalteorganen (11, 18), die mit einem pro Takt wirkenden, nicht mit dem Antrieb der Formböden (6) oder der Übergabeeinrichtung gekoppelten Antrieb verbunden ist.

7. Vorrichtung nach Anspruch 6, **dadurch gekennzeichnet, dass** die Stapelverschiebeeinrichtung (23) getrennt ist von der Stapelentnahmeeinrichtung (25).

8. Vorrichtung nach Anspruch 6, **gekennzeichnet durch** eine kombinierte Stapelentnahme-/Stapelverschiebeeinrichtung (25).

9. Vorrichtung nach einem der Ansprüche 6 bis 8, **gekennzeichnet durch** Düsen (22) im Bereich der Eintrittsöffnung der Stapelmagazine (2) bzw. der Fangplatte (16) zur Zufuhr eines Kühlmediums.

## Claims

1. A method for stacking containers (5) made of thermoplastic material that are moulded from a heated foil strip in a moulding/punching tool, punched out and transferred from the moulding/punching tool into stacking magazines (2) or into a catch plate (16) either directly by displacing the mould bottom (6) or by means of an intermediately arranged transfer device while still in the warm state, wherein the containers are retained in the stacking magazines or in the catch plate by retaining elements (11, 18) arranged on the stacking magazines (2) or on the catch plate (16) and removed therefrom in the form of container stacks (7), **characterized in that** the mould bottom (6) or the transfer device for delivering the containers (5) guides the containers until they reach first retaining elements (11, 18), wherein the mould bottom or the transfer device is then immediately moved back and the containers (5) of the container stack (7) are subsequently displaced to second retaining elements (11, 18 ) by means of a displacing device (25, 23), namely by a distance (A, B) that is greater or equal to the spacing between the stacked containers (5).

2. The method according to Claim 1, **characterized in that** the displacement of the container stacks (7) is carried out by a combined stack removing/stack displacing device (25).

3. The method according to Claim 1, **characterized in that** the displacement of the container stacks (7) is carried out by a displacing device (23) that is realized separately of the stack removing device (24).

4. The method according to one of Claims 1-3, **characterized in that** air is blasted into the gap between the last stacked container (5) and the container stack (7) during the displacement of the container stacks (7) by a distance (B) that is greater than the stack spacing.

5. The method according to Claim 4, **characterized in that** the air is cooled and/or sterilized.

6. A device for stacking containers (5) made of thermoplastic material that is arranged downstream of a moulding machine and in which containers are moulded from a heated foil strip of thermoplastic material in a moulding/punching tool, punched out and ejected by displacing the mould bottom (6), wherein said device contains stacking magazines (2) or a catch plate (16) that are provided with retaining elements (11, 18) and into which the containers (5) are stacked either directly from the moulding/punching tools with the aid of the mould bottoms (6) or by means of an intermediately arranged transfer device, **characterized by** retaining elements (11, 18) that are arranged in the region of the inlet opening of the stacking magazines (2) or the catch plate (16) and spaced apart by a distance (A, B) that is greater or equal to the spacing between the stacked containers (5), as well as by a stack displacing device (23, 25) for displacing the entire container stack (7) between the spaced-apart retaining elements (11, 18), wherein said stack displacing device is connected to a drive that operates in a cyclic fashion and is not coupled to the drive of the mould bottoms (6) or the transfer device.

7. The device according to Claim 6, **characterized in that** the stack displacing device (23) is realized separately of the stack removing device (25).

8. The device according to Claim 6, **characterized by** a combined stack removing/stack displacing device (25).

9. The device according to one of Claims 6-8, **characterized by** nozzles (22) that are arranged in the region of the inlet opening of the stacking magazines (2) or the catch plate (16), respectively, and serve for supplying a cooling medium.

## Revendications

1. Procédé d'empilement de conteneurs (5) en matière thermoplastique, qui sont moulés et estampés dans une bande de film chauffée dans un outillage de moulage/estampage puis transférés à l'état encore chaud depuis celui-ci, en déplaçant le fond du moule (6) directement ou au moyen d'un dispositif de transfert intercalé, dans des magasins d'empilement (2) ou dans une plaque réceptrice (16), sont retenus là par des organes de rétention (11, 18) disposés sur les magasins d'empilement (2) ou sur la plaque réceptrice (16) et en sont retirés sous forme de piles de conteneurs (7), **caractérisé en ce que** le fond du moule (6) ou le dispositif de transfert servant à acheminer les conteneurs (5) guide ceux-ci jusqu'à de premiers organes de rétention (11, 18), est reculé immédiatement et qu'ensuite les conteneurs (5), en entraînant la pile de conteneurs (7), sont déplacés au moyen d'un dispositif de déplacement (25, 23) sur une longueur (A, B) qui est supérieure ou égale à la longueur de la distance entre les conteneurs empilés (5) jusqu'à de deuxièmes organes de rétention (11, 18).

2. Procédé selon la revendication 1, **caractérisé en ce que** le déplacement des piles de conteneurs (7) est réalisé à l'aide d'un dispositif combiné de prélèvement de piles/déplacement de piles (25).

3. Procédé selon la revendication 1, **caractérisé en ce que** le déplacement des piles de conteneurs (7) est réalisé à l'aide d'un dispositif de déplacement (23) séparé du dispositif de prélèvement de piles (24).

4. Procédé selon l'une quelconque des revendications 1 à 3, **caractérisé en ce que**, lors d'un déplacement des piles de conteneurs (7) sur une distance (B) qui est supérieure ou égale à la distance entre les piles, de l'air est soufflé dans l'intervalle entre le dernier conteneur empilé (5) et la pile de conteneurs (7).

5. Procédé selon la revendication 4, **caractérisé en ce que** l'air est refroidi et/ou stérilisé.

6. Dispositif d'empilement de conteneurs (5) en matière thermoplastique, à rajouter sur une machine de moulage, dans laquelle, dans un outillage de moulage/estampage, des conteneurs sont moulés et estampés dans une bande de film chauffée en matière thermoplastique, puis éjectés en déplaçant le fond du moule (6), comprenant des magasins d'empilement (2) ou une plaque réceptrice (16) qui présentent des organes de rétention (11, 18) et dans lesquels les conteneurs (5) provenant directement de l'outillage de moulage/estampage sont empilés au moyen des fonds de moule (6) ou au moyen d'un dispositif de transfert intercalé, **caractérisé par** des organes de rétention (11, 18) disposés au niveau de l'orifice d'entrée des magasins d'empilement (2) ou de la plaque réceptrice (16) à une distance de longueur (A, B) qui est supérieure ou égale à la longueur de la distance entre les conteneurs empilés (5) ainsi que par un dispositif de déplacement de piles (23, 25) servant à déplacer l'ensemble de la pile de conteneurs (7) entre les organes de rétention éloignés (11, 18) et qui est relié à une commande agissant par impulsion et non couplée à la commande des fonds de moules (6) ou au dispositif de transfert.

7. Dispositif selon la revendication 6, **caractérisé en ce que** le dispositif de déplacement de piles (23) est séparé du dispositif de prélèvement de piles (25).

8. Dispositif selon la revendication 6, **caractérisé par** un dispositif combiné de prélèvement de piles/déplacement de piles (25).

9. Dispositif selon l'une quelconque des revendications 6 à 8, **caractérisé par** des buses (22) placées au niveau de l'orifice d'entrée des magasins d'empilement (2) ou de la plaque réceptrice (16) et destinées à acheminer un fluide de refroidissement.
